# EUROPEAN PATENT SPECIFICATION

(11) **EP 3 524 475 B1**
(45) Date of publication and mention of the grant of the patent: **19.08.2020**
(21) Application number: 18155908.9
(22) Date of filing: 09.02.2018
(51) Int. Cl.: B60R 3/00, B60R 3/02

(54) **RUNNING BOARD ASSEMBLY WITH A PROTECTIVE SHIELDING**
TRITTSTUFENSYSTEM MIT SCHUTZSCHILD
ENSEMBLE MARCHEPIED COMPORTANT UN GARDE-BOUE DE PROTECTION

(43) Date of publication of application: 14.08.2019
(73) Proprietor: Ford Global Technologies, LLC, Dearborn, MI 48126 (US)
(72) Inventor: Yilmaz, Selçuk Kubilay, Basiskele / KOCAELI (TR); Yilmaz, Zühal, Basiskele / KOCAELI (TR); Inam, Orhan, Gölcük / KOCAELI (TR); Tanriver, Ahmet Murat, Sancaktepe / ISTANBUL (TR)
(74) Representative: Illing, Rolf

(56) References cited:
- JP-A- H09 301 075
- JP-A- H10 226 277
- US-A- 5 193 829
- US-A- 5 382 035
- US-A1- 2004 100 063
- US-B2- 7 017 927

## Description

The present invention relates in general to motorised vehicles having a floor at an elevated height, and having a running board or step located alongside and at a bottom side of the vehicle for providing a step at an intermediate height between the ground and said floor for assisting people when entering or exiting the vehicle. The present invention relates more in particular to a means for preventing mud accumulation on such a running board. Specifically, the present invention provides a running board assembly, and a shielding for use in combination with such a running board assembly, and a vehicle comprising such a running board assembly.

Vehicles (e.g. a bus or a van or a mini-van) with a running board (also known as step) located alongside the vehicle for assisting the driver or passengers to easier get on or off the vehicle, are known in the art. A disadvantage of such a running board is that it can easily accommodate dirt or mud thrown up by a wheel located in front of the running board when driving.

In the prior art this problem seems to be solved in two ways. In a first solution, a relatively large and substantially planar or bent shield or flap is mounted between the wheel and the running board for preventing that particles thrown up by the wheel end up on the running board. In a second solution, the running board is rotatably mounted to the vehicle, and can be rotated to an extended position when the vehicle is stationary, and can be rotated into a retracted position when the vehicle is driving. However, these solutions may not be ideal under all circumstances, and for all kinds of running boards.

WO 1994/019228 A1 describes a vehicle mud flap for reducing side-spray from the wheels of heavy vehicles. The mud flap is mounted behind the wheels, and comprises a layer of tufted synthetic grass facing the wheels.

US 3,237,963 A describes a multi-layer mud flap comprising thermosetting resin and glass fibres. The mud flap has a smooth surface on its front side so as to resist abrasion and to easily free itself from dirt and other matter which flies against it. The mud flap has a decorative surface on its rear side.

WO 2002/053416 A2 describes a tubular and U-shaped running board assembly having a central step portion and a pair of leg portions, secured to a motor vehicle, or movably mounted to the motor vehicle. The running board is configured to be spaced vertically downwardly from and laterally outwardly from the vehicle undercarriage such that the step portion of the running board can assist a person moving through a doorway of the vehicle. The running board can have accessories mounted thereto such as, lights, electrical outlets, and mud flaps.

US 7,017,927 B2 that corresponds to the preamble of claim 1, describes a running board assembly, including a plurality of mounting brackets fixedly secured to the motor vehicle and extending therebelow. The running board assembly also includes a step movably secured to the plurality of brackets. The step defines a stepping surface and a peripheral edge extending around a portion of the stepping surface. The step is movable between a deployed position providing access to the stepping surface and a stowed position wherein the peripheral edge abuts the motor vehicle to cover the stepping surface during non-use.

JP H09-71186 A describes a side step for an automobile, and more particularly a side step for an automobile which can integrally mold to a desired shape using a resin.

DE 298 02 928 U1 describes an illuminated footboard for a vehicle in order to make it easier for the user of the vehicle to overcome the difference in height between the road surface and the floor of the vehicle cabin.

US 4,311,320 A describes a running board assembly for a vehicle including a running board plate which has an upturned lip on one edge thereof and a downturned lip on the opposite edge. A splash guard is mounted on the forward end of the plate and extends into the wheel well of the vehicle. The running board plate has longitudinal ridges and elastomeric strips.

US 5,193 829 A describes a running board removably mounted to a vehicle on a sub frame support system. The sub frame support system has brackets adjustably mounted to the vehicle frame, which support a receiving frame. The receiving frame is adjustably mounted to the brackets and has a pair of sockets for receiving the supporting members of the running board. The running board is a structural member having shaped support members extending from its ends and configured to mount in the sockets of the receiving frame. The running board is mounted to the vehicle by inserting the supporting members of the running board into the sockets of the receiving frame. Pins retain the support members in the sockets. The running board is removed from the vehicle by merely removing the pins and removing the running board from the receiving frame.

US 5,382,035 A describes a multi-part running board assembly attachable to a vehicle, including a longitudinally extending deck, a decorative overlay which covers the deck, and a pair of end caps which partially overlap the ends of the deck and overlay is provided. The deck includes recessed areas for receiving tab members which extend downwardly from the bottom surface of the overlay to secure the overlay to the deck. The end caps typically include vertically projecting portions which preclude debris from being projected upon the outer surface of the overlay by the vehicle's tires.

US D 260,253 S shows a design of a combined vehicle running board and splash guard.

US D 297,230 S shows a design of a combined vehicle side rail, step and splash guard.

There is always room for improvements and alternatives.

The present invention has the object to provide a running board assembly with a support surface and with a provision such that the running board assembly is less susceptible to accumulate dirt and/or mud and/or stones, and is also related to a vehicle comprising such a running board assembly.

It is a particular object of embodiments of the present invention to provide a running board assembly that accumulates less dirt and/or mud and/or stones on a support surface thereof.

It is a particular object of embodiments of the present invention to provide a running board assembly that is automatically extendable and retractable and has a reduced risk of not being able to fully extend or retract.

It is a particular object of embodiments of the present invention to provide a running board assembly which is extendable and retractable, and has a reduced risk of being damaged and/or a reduced risk of stalling the vehicle engine when extending or retracting the step.

These objects are achieved by a running board assembly having the features of claim 1, and by a vehicle having the features of claim 9. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

The present invention discloses a running board assembly for a motor vehicle, the running board assembly comprising: a step having an elongated shape and a support surface; at least two mounting brackets connected to the step for mounting the step to an undercarriage of a vehicle; a shielding having a three-dimensional structure for shielding at least a frontal portion of the step, wherein the brackets are adjustable between a first state corresponding to a retracted position of the step with respect to said vehicle, and a second state corresponding to an extended position of the step with respect to said vehicle; and wherein the running board assembly further comprises an actuation mechanism for moving the step between said retracted position and said extended position. According to the invention the shielding is fixedly mounted to one of the mounting brackets, wherein its three dimensional structure is for shielding at least an upper portion of the step and a frontal portion of the mounting bracket against mud.

It is an advantage of using the shielding that it prevents storage of mud, dirt and stones on the step surface, which are typically thrown up by a wheel of the vehicle, when the vehicle is in motion. By avoiding storage of dirt and/or stones and/or mud on the step surface, people entering the vehicle do not carry the dirt and/or mud and/or stones to the interior of the vehicle so that the interior stays clean.

It is a further advantage that a step without dirt, stones and/or mud reduces the risk of people falling or slipping when entering or leaving the vehicle.

It is a further advantage of mounting the shielding to one of the mounting brackets, because this allows mounting of the shielding to the running board before the running board itself is mounted to the vehicle. This provides an efficient method of mounting the shielding.

It is a further advantage of using a shielding with the three-dimensional structure, because such a structure has inherent rigidity in contrast to, for example, classical mud flaps.

Preferably, the size of the shielding is substantially small, for example, it fits in a box of 30 cm x 50 cm x 30 cm, but the invention is not limited hereto, and other dimensions may also be used. The shielding may be a protective shielding for protecting against accumulation of mud and/or dirt and/or stones on the step. The shielding may be made of a plastic material such as for example polypropylene. This material is ideally suited for withstanding moisture, and is light weight, and shows a low cohesion to, for example, mud. Preferably, the shielding is made as a single piece.

As mentioned above, the brackets are adjustable between a first state corresponding to a retracted position of the step with respect to said vehicle, and a second state corresponding to an extended position of the step with respect to said vehicle; and the running board assembly further comprises an actuation mechanism for moving the step between said retracted position and said extended position.

It is an advantage of directly mounting the shielding to one of the mounting brackets for optimal protection of the mounting bracket, thereby reducing or even eliminating the risk of dirt and/or mud and/or stones blocking or preventing correct movement of the actuation mechanism. By adding the shielding to the running board, the risk that the step cannot be completely extended or retracted can be reduced or even eliminated.

According to a further advantageous embodiment of the present invention, the actuation mechanism comprises an electrical motor.

It is an advantage of such a running board assembly that it can be automatically extended or retracted. Thanks to the shielding, the risk that the motor stalls before reaching its final position due to dirt and/or stones and/or mud accumulated against the mounting brackets is drastically reduced. This may also help preventing the engine of the vehicle from stopping due to the stalled electrical motor of the running board assembly.

According to a further advantageous embodiment of the present invention, the three-dimensional structure of the shielding comprises at least a first substantially planar area for facing said frontal portion of the step, and a second substantially planar area for facing said upper portion of the step, and a third substantially planar area for facing said frontal portion of the mounting bracket.

According to a further advantageous embodiment of the present invention, the first substantially planar area has a substiantially triangular shape, and the second substantially planar area has a substantially rectangular shape, and the third substantially planar area has a substantially triangular shape.

In hindsight, this is a relatively simple shape which has good rigidity (even for a relatively thin wall thickness from 1.0 to 3.0 mm) and offers good shielding to both the support surface and the mounting bracket. The shielding can be easily made, for example, using injection moulding.

According to a further advantageous embodiment of the present invention, the first and the second substantially planar area are substantially perpendicular to each other, and the second and the third substantially planar area are substantially perpendicular to each other, and the first and the third substantially planar area extend on opposite sides of the second substantially planar area. In other words, a cross section of these three areas forms a Z-shape. The first substantially planar area may have a thicker wall (e.g. 1.0 to 2.0 mm thicker) than the rest of the shielding for absorbing the impact of a stone hitting the shielding.

According to a further advantageous embodiment of the present invention, the second substantially planar area and the step surface define an angle in the range from 20 ° to 50 °, or in the range from 30 ° to 45 °.

According to a further advantageous embodiment of the present invention, the three-dimensional structure of the shielding comprises at least a first opening for allowing passage of a first screw or rivet or bolt for direct attachment of the shielding to the mounting bracket, and at least a second opening for allowing passage of a second screw or rivet or bolt for direct attachment of the shielding to the undercarriage of the vehicle; and optionally further comprises at least a third opening for allowing passage of a third screw or rivet or bolt for direct attachment of the shielding to the mounting bracket to the undercarriage of the vehicle.

It is convenient to attach the protective shielding by means of screws or rivets or bolts, especially in case the shielding is made of a plastic material.

According to a further advantageous embodiment of the present invention, the first and second and third opening are not co-linear.

Fixation of the shielding at three locations which are not co-linear offers stable mounting of the shielding, capable of withstanding vibrations of the vehicle when driving, and even the impact of (small) stones.

In another advantageous embodiment, the present invention discloses a shielding for protecting a step and a mounting bracket of a running board assembly described above against mud and/or dirt and/or stones, the shielding having a three-dimensional structure comprising at least a first substantially planar area for facing a frontal portion of the step, and a second substantially planar area for facing an upper portion of the step, and a third substantially planar area for facing a frontal portion of the mounting bracket; wherein the first and the second substantially planar area are substantially perpendicular to each other; and wherein the second and the third substantially planar area are substantially perpendicular to each other; and wherein the first and third substantially planar area extend on opposite sides of the second substantially planar area.

It is an advantage that this shielding simultaneously prevents accumulation of mud and/or dirt and/or stones on both the step surface and the mounting bracket. While it would also be possible to provide two or more separate shieldings for the protection of the step surface on the one hand and the protection of the bracket on the other hand, it is an advantage of the specific shape and position of the shielding of the present invention that a single protective shielding is sufficient for protecting both at the same time.

In another advantageous embodiment, the present invention discloses a vehicle comprising: at least one front wheel and at least one rear wheel; a running board assembly as described above mounted to an undercarriage of the vehicle.

It is an advantage of such a vehicle that it has a step which allows easy entering or exiting the vehicle. The running board assembly is typically located between a front wheel and a rear wheel. The protective shielding of the running board typically faces the front wheel. The vehicle may for example be a van, an ambulance, a school bus, a city bus, but the present invention is not limited hereto, and may also be another kind of vehicle, for example a Ranger.

According to a further advantageous embodiment of the present invention, the vehicle further comprises a controller for selectively driving the motor to move the step away from the vehicle to an extended position, and for driving the motor to move the step towards the vehicle to a retracted position.

According to a further advantageous embodiment of the present invention, the vehicle further comprises a sensor mounted to the running board assembly and being operatively connected to the controller; wherein the controller is configured for receiving sensor information from the sensor and for driving and/or stopping the motor using the received sensor information.

It is an advantage to control the motor in a closed loop system rather than an open loop system, because the sensor may give feedback when something goes wrong during the extension or retraction process, for example, in case the step would accidentally hit a rock under the vehicle. By stopping the motor, damage to the step and/or damage to the electrical motor and/or stalling of the vehicle engine can be prevented.

The sensor may advantageously be a temperature sensor for measuring a temperature of the motor during extension or retraction of the step. If the temperature increases abnormally, this may be an indication that the motor is stalled due to dirt or stones, and the controller may stop the motor.

The sensor may advantageously be a position sensor for measuring a position (e.g. angular position) of the motor. If the controller notices that the position provided by the sensor remains constant at a position between the fully retracted and the fully extended position, despite electrical power being provided to the motor, this may be an indication that the motor is stalled due to dirt or stones, and the controller can stop the motor.

However, other sensors may also be used, for example, a speed sensor may be used to measure motor speed, and the controller can compare the measured motor speed with a predetermined threshold, and decide to stop energizing the motor if the speed is below the threshold.

According to a further advantageous embodiment of the present invention, the sensor is selected from the group consisting of a position sensor, a proximity sensor, a contact sensor, a distance sensor, a speed sensor, a force sensor, a pressure sensor, a power sensor, a temperature sensor.

According to a further advantageous embodiment of the present invention, the vehicle further comprises a sliding door located substantially above said running board assembly when the sliding door is in its closed position.

It is an advantage that the running board assembly of the present invention is particularly suitable for use in vehicles having a sliding door.

Further features and advantages of the present invention will become apparent from the following description of a non-limiting embodiment of the invention, which will be explained below with reference to the drawing. In the drawings
- FIG. 1: shows a vehicle with a running board assembly, and shows how the front wheels can throw mud and/or dirt and/or stones on a support surface of the running board assembly, when driving on a road;
- FIG. 2: shows the vehicle of FIG. 1 when driving off-road, and illustrates how the front wheels throw large amounts of mud and/or dirt and/or stones on the support surface of the running board assembly;
- FIG. 3: shows a portion of the vehicle of FIG. 2 with an open door, and with a running board assembly covered with mud and/or dirt and/or stones;
- FIG. 4: shows a running board assembly with two mounting brackets, one of which is motorised, as may be used in the vehicle shown in FIG. 2;
- FIG. 5: shows a cut-away view of a left and a right side panel of the vehicle of FIG. 2, and the relative position of the side panels and the running board assembly of FIG. 4 when mounted to an undercarriage of the vehicle;
- FIG. 6: is an enlarged view of a portion of FIG. 5 indicated by the circle;
- FIG. 7: is a further enlarged view of FIG. 6;
- FIG. 8: shows a running board assembly according to the present invention, which can be seen as a variant of the running board assembly of FIG. 4 with the addition of a shielding,
- FIG. 9: shows a shielding according to the present invention, as can be used in the running board assembly of FIG. 8, in perspective view;
- FIG. 10: is a schematic drawing to indicate important parts of the shielding of FIG. 9;
- FIG. 11: is a rear view on the shielding of FIG. 9;
- FIG. 12: shows a cut-away view of a left and a right side panel of the vehicle of FIG. 2, and the relative position of the side panels and the running board assembly of FIG. 8 when mounted to an undercarriage of the vehicle, whereby FIG. 12 can be seen as a variant of FIG. 5;
- FIG. 13: is an enlarged view of a portion of FIG. 12 indicated by the circle; and
- FIG. 14: is a further enlarged view of FIG. 13.

The present invention is related to motor vehicles having a running board located alongside of, and at a bottom side of the vehicle for providing a step for assisting people when entering or when exiting the vehicle. The present invention relates more in particular to a means for preventing accumulation of mud and/or dirt and/or stones on such a running board.

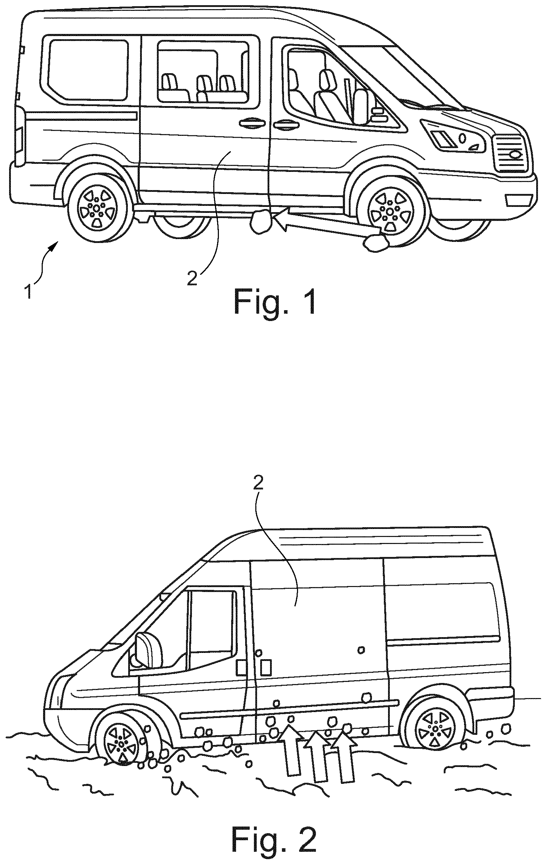

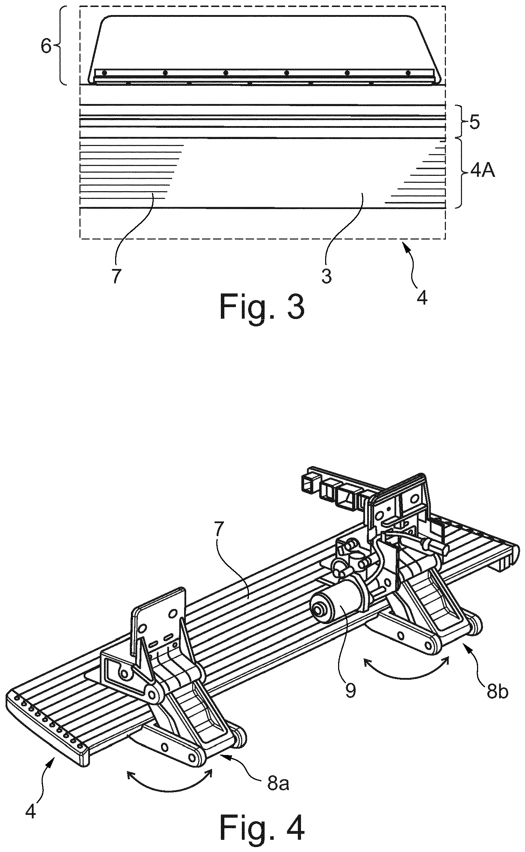

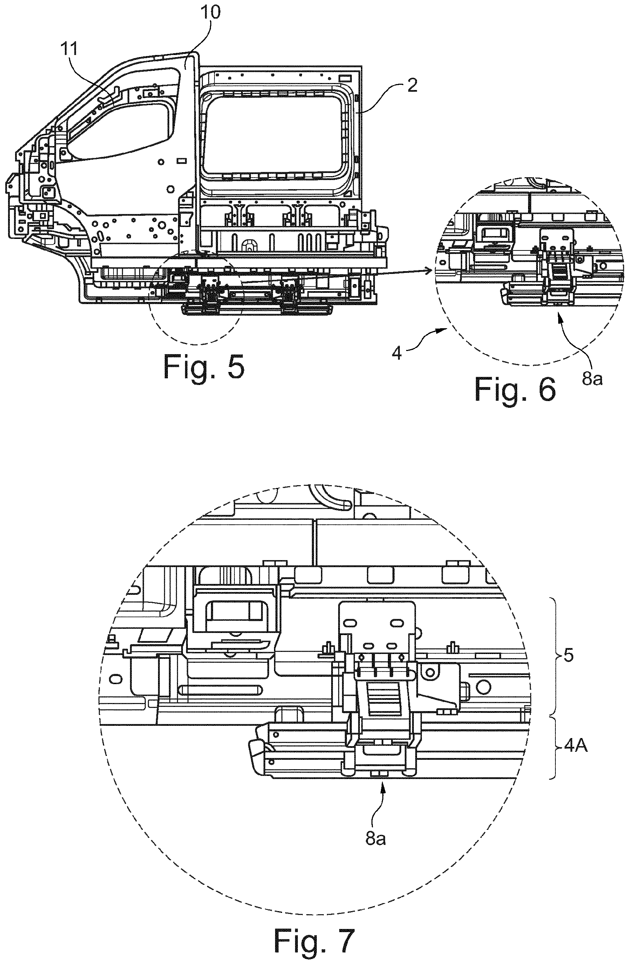

FIG. 1 shows a vehicle 1 with an exemplary running board assembly, and shows how the front wheels can throw mud or dirt or stones on a support surface of the running board assembly, when driving. The running board assembly of the vehicle 1 will be shown in more detail in FIG. 4, and a way in which the running board assembly can be mounted to an undercarriage of the vehicle will be shown in more detail in FIG. 5 to FIG. 7.

FIG. 2 shows the vehicle of FIG. 1 when driving off-road, and illustrates how the front wheels throw large amounts of mud and/or dirt and/or stones on the support surface of the running board assembly as indicated by the white arrows, and in the example shown also to the slidable door 2.

FIG. 3 shows a portion of the vehicle of FIG. 2 with an open door (the door itself is not visible in FIG. 3). As can be seen, a support surface 7 of the running board assembly 4 is covered with mud and/or dirt and/or stones 3. To correctly interpret the picture, the region 6 shows an interior portion of the vehicle, the region 5 shows a portion of the chassis or undercarriage of the vehicle, the region 4A shows a part of the running board assembly 4 that extends from the vehicle.

FIG. 4 shows a running board assembly 4 with two mounting brackets 8a, 8b, one of which having a motor 9. This running board assembly can be used in the vehicle of FIG. 2. In FIG. 4 the brackets 8a, 8b are in a retracted state, meaning that the support surface 7 is retracted towards the vehicle. When mounted to the vehicle (as shown in FIG. 5 to FIG. 7), this means that the support surface 7 is located at least partly under the chassis or undercarriage 5 of the vehicle.

FIG. 5 shows a cut-away view of a left side panel 10 and a right side panel 11 of the vehicle of FIG. 2, and shows how the running board assembly 4 of FIG. 4 is mounted to the undercarriage 5 of the vehicle. FIG. 5 shows in particular the relative position of the running board assembly 4 and the sliding door 2 when the door is closed.

FIG. 6 is an enlarged view of a portion of FIG. 5 indicated by the circle.

FIG. 7 is a further enlarged view of FIG. 6, showing even better that the step of the running board assembly 4 is located substantially below the vehicle chassis 5, when the running board assembly is in its retracted position.

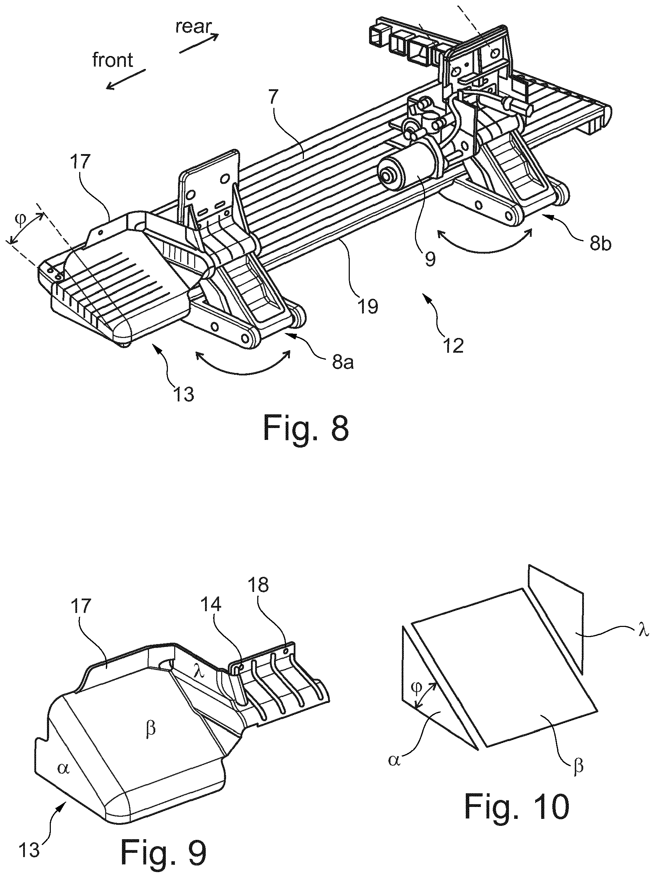

FIG. 8 shows a running board assembly 12 according to the present invention. It is largely identical to the running board assembly 4 of FIG. 4, but additionally comprises a mechanical protective shielding 13. As can be seen, the shielding 13 is mounted directly to the mounting bracket 8a.

The shielding has a three-dimensional structure for shielding at least a frontal portion of the step (schematically indicated with dotted vertical lines) and for shielding an upper portion of the support surface (schematically indicated by dotted lines in the longitudinal direction of the step) and for shielding a frontal portion of the mounting bracket 8a (schematically indicated by vertical lines) against mud and/or dirt and/or stones.

The brackets 8a, 8b each comprise a pair of hinges allowing a slightly downwards but mainly substantially horizontal movement of the step 19, as schematically indicated by the arrows. More specifically the brackets 8a, 8b of FIG. 8 are in a first state corresponding to a retracted position of the step 19 with respect to the vehicle. As can be appreciated, when the brackets are in a second state (not shown), the step is moved into an extended position with respect to the vehicle.

The running board assembly 12 of FIG. 8 comprises an electrical motor 9 as an actuation mechanism for automatically moving the step 19 between the retracted position and the extended position.

FIG. 9 shows the mechanical protective shielding 13 according to the present invention, as is used in the running board assembly of FIG. 8, in perspective view. As can be seen in FIG. 8 and FIG. 9, the shielding 13 has a three-dimensional shape comprising a first substantially planar area α for facing a frontal portion of the step, and a second substantially planar area β for facing an upper portion of the step, and a third substantially planar area λ for facing a frontal portion of the mounting bracket 8a.

FIG. 10 is a schematic representation of these substantially planar areas, which is added to better appreciate the main characteristics of the shielding. As can be seen in FIG. 10, the first substantially planar area α has a substiantially triangular shape, and the second substantially planar area β has a substantially square or rectangular shape, and the third substantially planar area λ has a substantially triangular shape. In the example shown, a lower edge of the first area α is substantially parallel with an upper edge of the third area λ. The first and the second substantially planar area α, β are substantially perpendicular to each other. The second and the third substantially planar area β, λ are substantially perpendicular to each other. The first and third substantially planar area α, λ extend on opposite sides of the second substantially planar area β. In the mounted position of FIG. 8, the first area α is oriented downwardly with respect to the second area β, and the third area λ is oriented upwardly with respect to the second area β. The second substantially planar area β and the support surface 7 of the step define an angle ϕ in the range from 20 ° to 50 °, or in the range from 30 ° to 45 °. The angle may, for example, be equal to about 30 ° or equal to about 35 ° or equal to about 40 ° or equal to about 45 °.

Referring back to FIG. 9, it can be seen that the three-dimensional structure of the shielding 13 further comprises at least a first opening 14 for allowing passage of a first screw or rivet or bolt for direct attachment of the shielding 13 to the mounting bracket 8a, and at least a second opening 17 for allowing passage of a second screw or rivet or bolt for direct attachment of the shielding 13 to the undercarriage of the vehicle.

The first opening 14 is preferably made in a first substantially planar connection area, and the second opening 17 is preferably made in a second substantially planar connection area. The first and second substantially planar connection areas are not located in the same plane, but are offset from each other. This provides more rigid mounting, and prevents easy bending.

Preferably, the three-dimensional structure further comprises a third opening 18 for allowing passage of a third screw or rivet or bolt for direct attachment of the shielding 13 to the mounting bracket or to the undercarriage. The third opening 18 is preferably located in the same substantially planar connection area as the first opening 14, for improving rigid mounting.

Preferably, the first and the second and the third opening 14, 17, 18 are not co-linear (i.e. are not located on the same imaginary line). This provides more stability to the 3D-structure.

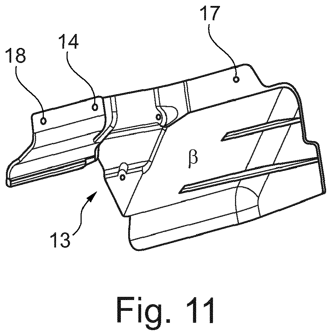

FIG. 11 is a rear view on the shielding of FIG. 9.

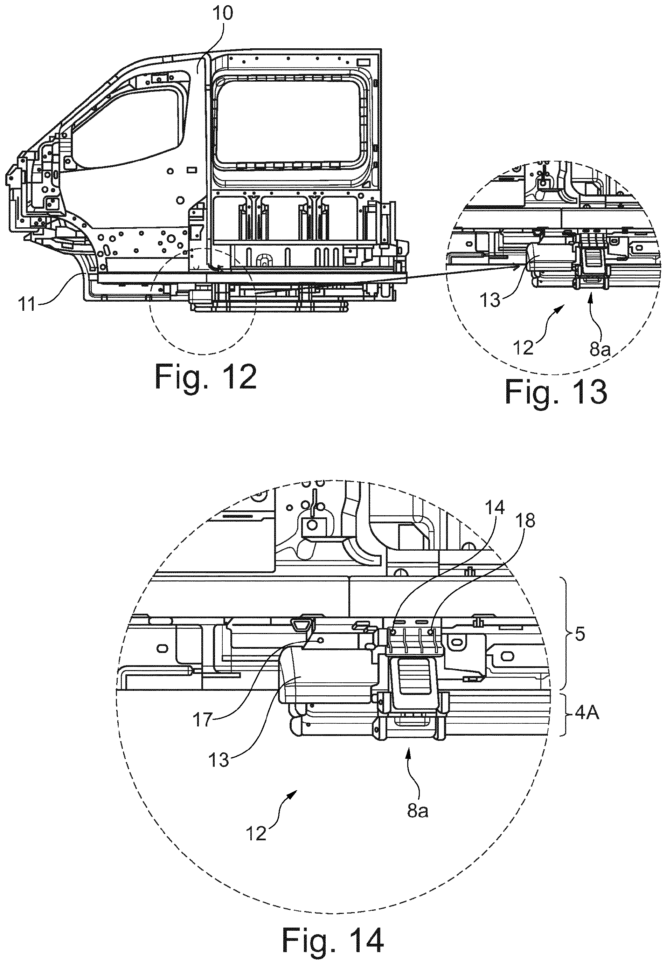

FIG. 12 shows the left side panel 10 and the right side panel 11 of FIG. 5, and shows how the running board assembly 12 of the present invention (see FIG. 8) is mounted to the undercarriage of the vehicle, in much the same way as was shown in FIG. 5, with one major difference, namely that the running board assembly of FIG. 8 further comprises a mechanical protective shielding 13 which prevents mud and/or dirt and/or stones from accumulating on the support surface 7 of the step 19, and for protecting at least a portion of a front surface of the step, and for protecting at least a front portion of the bracket 8a. With "front" portion it is meant that the surfaces are oriented towards the front of the vehicle.

FIG. 13 is an enlarged view of a portion of FIG. 12 indicated by the circle.

FIG. 14 is a further enlarged view of FIG. 13. It is a major advantage that the shielding 13 is mounted to the mounting bracket 8a by means of connection means (e.g. a screw or a rivet or a bolt, not explicitly shown) inserted through the openings 14 and 18, and is also mounted to the undercarriage of the vehicle by means of connection means (e.g. a screw or a rivet or a bolt, not explicitly shown) inserted through the opening 17. This provides very robust mounting of the shielding, especially since the openings 17, 14 and 18 are not co-linear.

### REFERENCE NUMERALS

- 1: vehicle,
- 2: sliding door,
- 3: mud and/or dirt and/or stones,
- 4: running assembly,
- 5: chassis or undercarriage of the vehicle,
- 6: interior of a vehicle,
- 7: support surface,
- 8a, 8b: first/second mounting bracket,
- 9: motor,
- 10: left side panel,
- 11: right side panel,
- 12: running assembly with shielding,
- 13: shielding,
- 14: first opening,
- 17: second opening,
- 18: third opening

## Claims

1. A running board assembly (12) for a motor vehicle, the running board assembly comprising:
- a step (19) having an elongated shape and a support surface (7);
- at least two mounting brackets (8a, 8b) connected to the step (19) for mounting the step to an undercarriage of a vehicle;
- a shielding (13) having a three-dimensional structure for shielding at least a frontal portion of the step (19),
wherein the brackets (8a, 8b) are adjustable between a first state corresponding to a retracted position of the step (19) with respect to said vehicle, and a second state corresponding to an extended position of the step with respect to said vehicle;
and wherein the running board assembly (12) further comprises an actuation mechanism for moving the step between said retracted position and said extended position,
**characterized in that**
the shielding (13) is fixedly mounted to one (8a) of the mounting brackets, and **in that** its three dimensional structure is for shielding at least an upper portion of the step and a frontal portion of the mounting bracket (8a) against mud.

2. A running board assembly (12) according to claim1,
wherein the actuation mechanism comprises an electrical motor (9).

3. A running board assembly (12) according to any of the previous claims,
wherein the three-dimensional structure of the shielding (13) comprises at least a first substantially planar area (α) for facing said frontal portion of the step (19), and a second substantially planar area (β) for facing said upper portion of the step, and a third substantially planar area (λ) for facing said frontal portion of the mounting bracket (8a).

4. A running board assembly (12) according to claim 3,
wherein the first substantially planar area (α) has a substiantially triangular shape, and the second substantially planar area (β) has a substantially rectangular shape, and the third substantially planar area (λ) has a substantially triangular shape.

5. A running board assembly (12) according to claim 3 or 4,
wherein the first substantially planar area (α) and the second substantially planar area (β) are substantially perpendicular to each other, and
wherein the second substantially planar area (β) and the third substantially planar area (λ) are substantially perpendicular to each other,
and wherein the first substantially planar area (α) and third substantially planar area (λ) extend on opposite sides of the second substantially planar area (β).

6. A running board assembly (12) according to any of the claims 3 to 5,
wherein the second substantially planar area (β) and the step surface (7) define an angle (ϕ) in the range from 20 ° to 50 °.

7. A running board assembly (12) according to any of the previous claims,
wherein the three-dimensional structure of the shielding comprises at least a first opening (14) for allowing passage of a first screw or rivet or bolt for direct attachment of the shielding (13) to the mounting bracket (8a), and at least a second opening (17) for allowing passage of a second screw or rivet or bolt for direct attachment of the shielding to the undercarriage of the vehicle;
and optionally comprises at least a third opening (18) for allowing passage of a third screw or rivet or bolt for direct attachment of the shielding to the mounting bracket (8a) to the undercarriage of the vehicle.

8. A running board assembly (12) according to any of the previous claims,
wherein the first and second and third opening (14, 17, 18) are not co-linear.

9. A vehicle (1) comprising:
- at least one front wheel and at least one rear wheel;
- a running board assembly (12) according to any of the claims 1 to 8, mounted to an undercarriage of the vehicle.

10. A vehicle (1) according to claim 9 and dependent on claim 2,
- further comprising a controller for selectively driving the motor (9) to move the step (19) away from the vehicle to an extended position, and for driving the motor to move the step (19) towards the vehicle to a retracted position.

11. A vehicle (1) according to claim 10,
further comprising a sensor mounted to the running board assembly (12) and being operatively connected to the controller;
wherein the controller is configured for receiving sensor information from the sensor and for driving and/or stopping the motor (9) using the received sensor information.

12. A vehicle according to claim 11,
wherein the sensor is selected from the group consisting of a position sensor, a proximity sensor, a contact sensor, a distance sensor, a speed sensor, a force sensor, a pressure sensor, a power sensor, a temperature sensor.

13. A vehicle according to any of the claims 9 to 12,
further comprising a sliding door (2) located substantially above said running board assembly (12) when the sliding door (2) is in its closed position.

## Patentansprüche

1. Trittbrettanordnung (12) für ein Kraftfahrzeug, wobei die Trittbrettanordnung Folgendes umfasst:
- eine Stufe (19) mit einer länglichen Form und einer Tragfläche (7);
- zumindest zwei mit der Stufe (19) verbundene Montagehalterungen (8a, 8b) zum Montieren der Stufe an einem Fahrgestell eines Fahrzeugs;
- eine Abschirmung (13) mit einer dreidimensionalen Struktur zum Abschirmen zumindest eines vorderen Abschnitts der Stufe (19),
wobei die Halterungen (8a, 8b) zwischen einem ersten Zustand, der einer in Bezug auf das Fahrzeug zurückgezogene Position der Stufe (19) entspricht, und einem zweiten Zustand, der einer in Bezug auf das Fahrzeug ausgefahrenen Position der Stufe entspricht, einstellbar ist;
und wobei die Trittbrettanordnung (12) ferner einen Betätigungsmechanismus zum Bewegen der Stufe zwischen der zurückgezogenen Position und der ausgefahrenen Position umfasst,
**dadurch gekennzeichnet, dass**
die Abschirmung (13) fest an einer (8a) der Montagehalterungen montiert ist und dass ihre dreidimensionale Struktur dazu dient, zumindest einen oberen Abschnitt der Stufe und einen vorderen Abschnitt der Montagehalterung (8a) gegen Schlamm abzuschirmen.

2. Trittbrettanordnung (12) nach Anspruch 1,
wobei der Betätigungsmechanismus einen Elektromotor (9) umfasst.

3. Trittbrettanordnung (12) nach einem der vorangehenden Ansprüche,
wobei die dreidimensionale Struktur der Abschirmung (13) zumindest einen ersten im Wesentlichen ebenen Bereich (α), der dem vorderen Abschnitt der Stufe (19) zugewandt ist, und einen zweiten im Wesentlichen ebenen Bereich (β), der dem oberen Abschnitt der Stufe zugewandt ist, und einen dritten im Wesentlichen ebenen Bereich (λ), der dem vorderen Abschnitt der Montagehalterung (8a) zugewandt ist,
umfasst.

4. Trittbrettanordnung (12) nach Anspruch 3,
wobei der erste im Wesentlichen ebene Bereich (α) eine im Wesentlichen dreieckige Form aufweist und der zweite im Wesentlichen ebene Bereich (β) eine im Wesentlichen rechteckige Form aufweist und der dritte im Wesentlichen ebene Bereich (λ) eine im Wesentlichen dreieckige Form aufweist.

5. Trittbrettanordnung (12) nach Anspruch 3 oder 4,
wobei der erste im Wesentlichen ebene Bereich (α) und der zweite im Wesentlichen ebene Bereich (β) im Wesentlichen senkrecht zueinander sind, und
wobei der zweite im Wesentlichen ebene Bereich (β) und der dritte im Wesentlichen ebene Bereich (λ) im Wesentlichen senkrecht zueinander sind,
und wobei sich der erste im Wesentlichen ebene Bereich (α) und der dritte im Wesentlichen ebene Bereich (λ) auf gegenüberliegenden Seiten des zweiten im Wesentlichen ebenen Bereichs (β) erstrecken.

6. Trittbrettanordnung (12) nach einem der Ansprüche 3 bis 5,
wobei der zweite im Wesentlichen ebene Bereich (β) und die Stufenfläche (7) einen Winkel (ϕ) im Bereich von 20 ° bis 50 ° definieren.

7. Trittbrettanordnung (12) nach einem der vorangehenden Ansprüche,
wobei die dreidimensionale Struktur der Abschirmung zumindest eine erste Öffnung (14) zum Ermöglichen eines Durchgangs einer ersten Schraube oder eines ersten Niets oder Bolzens zur direkten Befestigung der Abschirmung (13) an der Montagehalterung (8a) und zumindest eine zweite Öffnung (17) zum Ermöglichen eines Durchgangs einer zweiten Schraube oder eines zweiten Niets oder Bolzens zur direkten Befestigung der Abschirmung am Fahrgestell des Fahrzeugs umfasst;
und optional zumindest eine dritte Öffnung (18) zum Ermöglichen eines Durchgangs einer dritten Schraube oder eines dritten Niets oder Bolzens zur direkten Befestigung der Abschirmung an der Montagehalterung (8a) am Fahrgestell des Fahrzeugs umfasst.

8. Trittbrettanordnung (12) nach einem der vorangehenden Ansprüche, wobei die erste und die zweite und die dritte Öffnung (14, 17, 18) nicht kollinear sind.

9. Fahrzeug (1), umfassend:
- zumindest ein Vorderrad und zumindest ein Hinterrad;
- eine Trittbrettanordnung (12) nach einem der Ansprüche 1 bis 8, die am Fahrgestell des Fahrzeugs montiert ist.

10. Fahrzeug (1) nach Anspruch 9 und in Abhängigkeit von Anspruch 2,
- ferner umfassend eine Steuerung zum selektiven Antreiben des Motors (9), um die Stufe (19) vom Fahrzeug weg in eine ausgefahrene Position zu bewegen, und zum Antreiben des Motors, um die Stufe (19) zum Fahrzeug hin in eine zurückgezogene Position zu bewegen.

11. Fahrzeug (1) nach Anspruch 10,
ferner umfassend einen Sensor, der an der Trittbrettanordnung (12) montiert und mit der Steuerung wirkverbunden ist;
wobei die Steuerung so konfiguriert ist, dass sie Sensorinformationen vom Sensor empfängt und den Motor (9) unter Verwendung der empfangenen Sensorinformationen antreibt und/oder stoppt.

12. Fahrzeug nach Anspruch 11,
wobei der Sensor aus der Gruppe ausgewählt ist, die aus einem Positionssensor, einem Näherungssensor, einem Kontaktsensor, einem Abstandssensor, einem Geschwindigkeitssensor, einem Kraftsensor, einem Drucksensor, einem Leistungssensor und einem Temperatursensor besteht.

13. Fahrzeug nach einem der Ansprüche 9 bis 12,
ferner umfassend eine Schiebetür (2), die im Wesentlichen über der Trittbrettanordnung (12) angeordnet ist, wenn sich die Schiebetür (2) in ihrer geschlossenen Position befindet.

## Revendications

1. Ensemble marchepied (12) pour un véhicule à moteur, l'ensemble marchepied comprenant :
une marche (19) présentant une forme allongée et comportant une surface de support (7) ;
au moins deux supports de montage (8a, 8b) reliés à la marche (19) pour monter la marche sur un train roulant d'un véhicule ;
un garde-boue (13) ayant une structure tridimensionnelle pour protéger au moins une partie frontale de la marche (19),
dans lequel les supports (8a, 8b) peuvent être réglés entre un premier état correspondant à une position rétractée de la marche (19) par rapport audit véhicule, et un second état correspondant à une position étendue de la marche par rapport audit véhicule ;
et dans lequel l'ensemble marchepied (12) comprend en outre un mécanisme d'actionnement servant à déplacer la marche entre ladite position rétractée et ladite position étendue,
**caractérisé en ce que**
le garde-boue (13) est monté à demeure sur l'un (8a) des supports de montage, et **en ce que** sa structure tridimensionnelle est destinée à protéger au moins une partie supérieure de la marche et une partie frontale du support de montage (8a) contre la boue.

2. Ensemble marchepied (12) selon la revendication 1,
dans lequel le mécanisme d'actionnement comprend un moteur électrique (9).

3. Ensemble marchepied (12) selon l'une quelconque des revendications précédentes,
dans lequel la structure tridimensionnelle du garde-boue (13) comprend au moins une première surface sensiblement plane (α) destinée à faire face à la partie frontale de la marche (19), et une deuxième surface sensiblement plane (β) destinée à faire face à ladite partie supérieure de la marche, et une troisième surface sensiblement plane (λ) destinée à faire face à la partie frontale du support de montage (8a).

4. Ensemble marchepied (12) selon la revendication 3,
dans lequel la première surface sensiblement plane (α) présente une forme sensiblement triangulaire, et la deuxième surface sensiblement plane (β) présente une forme sensiblement rectangulaire, et la troisième surface sensiblement plane (λ) présente une forme sensiblement triangulaire.

5. Ensemble marchepied (12) selon la revendication 3 ou 4,
dans lequel la première surface sensiblement plane (α) et la deuxième surface sensiblement plane (β) sont sensiblement perpendiculaires l'une à l'autre, et
dans lequel la deuxième surface sensiblement plane (β) et la troisième surface sensiblement plane (λ) sont sensiblement perpendiculaires l'une à l'autre,
et dans lequel la première surface sensiblement plane (α) et la troisième surface sensiblement plane (λ) s'étendent sur des côtés opposés de la deuxième surface sensiblement plane (β).

6. Ensemble marchepied (12) selon l'une quelconque des revendications 3 à 5,
dans lequel la deuxième surface sensiblement plane (β) et la surface de la marche (7) définissent un angle (ϕ) compris entre 20° et 50°.

7. Ensemble marchepied (12) selon l'une quelconque des revendications précédentes,
dans lequel la structure tridimensionnelle du garde-boue comprend au moins une première ouverture (14) destinée à permettre le passage d'une première vis ou d'un premier rivet ou boulon pour une fixation directe du garde-boue (13) sur le support de montage (8a), et au moins une deuxième ouverture (17) destinée à permettre le passage d'une deuxième vis ou d'un deuxième rivet ou boulon pour une fixation directe du garde-boue sur le train roulant du véhicule ;
et comprend facultativement au moins une troisième ouverture (18) destinée à permettre le passage d'une troisième vis ou d'un troisième rivet ou boulon pour une fixation directe du garde-boue sur le support de montage (8a) sur le train roulant du véhicule.

8. Ensemble marchepied (12) selon l'une quelconque des revendications précédentes,
dans lequel les première et deuxième et troisième ouvertures (14, 17, 18) ne sont pas colinéaires.

9. Véhicule (1) comprenant :
au moins une roue avant et au moins une roue arrière ;
un ensemble marchepied (12) selon l'une quelconque des revendications 1 à 8, monté sur un train roulant du véhicule.

10. Véhicule (1) selon la revendication 9 et dépendant de la revendication 2,
comprenant en outre un contrôleur destiné à, de façon sélective, entraîner le moteur (9) pour éloigner la marche (19) du véhicule vers une position étendue, et entraîner le moteur pour rapprocher la marche (19) du véhicule vers une position rétractée.

11. Véhicule (1) selon la revendication 10,
comprenant en outre un capteur monté sur l'ensemble marchepied (12) et relié en fonctionnement au contrôleur ;
dans lequel le contrôleur est configuré pour recevoir des informations de détection provenant du capteur et pour entraîner et/ou stopper le moteur (9) au moyen des informations de détection reçues.

12. Véhicule selon la revendication 11,
dans lequel le capteur est sélectionné parmi le groupe constitué d'un capteur de position, d'un capteur de proximité, d'un capteur de contact, d'un capteur de distance, d'un capteur de vitesse, d'un capteur de force, d'un capteur de pression, d'un capteur de puissance et d'un capteur de température.

13. Véhicule selon l'une quelconque des revendications 9 à 12,
comprenant en outre une porte coulissante (2) située sensiblement au-dessus dudit ensemble marchepied (12) lorsque la porte coulissante (2) est dans sa position fermée.
